# EUROPÄISCHE PATENTSCHRIFT

(11) **EP 4 584 734 B1**
(45) Veröffentlichungstag und Bekanntmachung des Hinweises auf die Patenterteilung: **03.06.2026**
(21) Anmeldenummer: 23772422.4
(22) Anmeldetag: 07.09.2023
(51) Int. Cl.: G06Q 10/0635, B23K 31/00, B23K 31/12, G06Q 50/04, G06T 7/00

(54) **VERFAHREN ZUR SCHWEISSNAHTOPTIMIERUNG**
METHOD FOR WELD SEAM OPTIMISATION
PROCÉDÉ D'OPTIMISATION DE CORDON DE SOUDURE

(30) Priorität: 08.09.2022 DE 102022209327
(43) Veröffentlichungstag der Anmeldung: 16.07.2025
(73) Patentinhaber: TKMS GmbH, 24143 Kiel (DE); thyssenkrupp AG, 45143 Essen (DE)
(72) Erfinder: NEUSTOCK, Jonas, 24340 Eckernförde (DE)
(74) Vertreter: thyssenkrupp Intellectual Property GmbH
(86) Internationale Anmeldenummer: PCT/EP2023/074615
(87) Internationale Veröffentlichungsnummer: WO 2024/052472

(56) Entgegenhaltungen:
- US-A1- 2015 379 894
- US-A1- 2021 318 673

## Beschreibung

Die Erfindung betrifft ein Verfahren zur Vorhersage der Qualität einer manuell hergestellten Schweißnaht bei der Erzeugung der Schweißnaht.

Während in vielen Bereichen heute Schweißroboter sehr gut vorhersagbare Schweißnähte erzeugen können, ist dieses nicht in allen Bereichen möglich. Gerade bei Spezialanwendungen ist noch heute ein manuelles Schweißen notwendig. Als Beispiel sei hier das Verschweißen eines Druckkörpers eines Unterseebootes genannt. Im Regelfall handelt es sich um Einzelanfertigungen oder Um Anfertigungen sehr kleiner Stückzahlen. Außerdem ist das Ergebnis sicherheitsrelevant, ein Versagen der Schweißnaht ist nicht akzeptabel. Daher wird in solchen Prozessen üblicherweise eine Vollkontrolle der fertigen Schweißnaht insbesondere mittels Röntgen vorgenommen. Wird hierbei ein Fehler in der Schweißnaht gefunden, so muss die Schweißnaht üblicherweise aufgetrennt und neu gefertigt werden. Geschieht dieses beispielsweise bei einer zwei Baugruppen eines Unterseebootes verbindenden Schweißnaht, so wird das Unterseeboot über dem gesamten Querschnitt wieder aufgetrennt und erneut zusammengeschweißt, was ein enormer Aufwand ist.

Es wäre daher wünschenswert einen Schweißdefekt möglichst bereist dann zu erkennen, wenn dieser entsteht, noch besser, eine Warnung zu haben, wenn das Entstehen eines Fehlers möglich ist. Im ersten Fall ist die wieder aufzutrennende Schweißnaht kürzer und weniger Arbeitszeit verloren, im zweiten Fall können derartige nachträgliche Arbeiten im Idealfall vollständig vermeiden werden.

Aus der US 2021/318673 A1 ist eine in-situ-Prüfverfahren auf Basis eines digitalen Datenmodells der Schweißnaht bekannt.

Aus der US 2015/379894 A1 ist ein System und ein Verfahren zum Monitoring von Schweißinformationen bekannt.

Aufgabe der Erfindung ist es, ein Verfahren zur möglichst frühzeitigen Vorhersage von Defekten in manuell gefertigten Schweißnähten zu ermöglichen.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie der Zeichnung.

Das erfindungsgemäße Verfahren dient zum Vorhersagen der Qualität einer manuell gefertigten Schweißnaht. Es geht somit um eine Schweißnaht, welche von einem Schweißer händisch hergestellt wird. Im Gegensatz zu Schweißnähten, welche durch Roboter hergestellt werden, beispielsweise in der Automobilindustrie unterliegen solche Schweißnähte dem menschlichen Faktor und können daher Variationen aufweisen.

Das Verfahren weist einen Anlernvorgang a) und einen Überwachungsvorgang b) auf.

Der Anlernvorgang a) weist die folgenden Schritte auf:

| | |
|---|---|
| a1) | Erzeugen einer manuellen Schweißnaht und dabei |
| a1.1) | Erfassen der Schweißposition, |
| a1.2) | Erfassen wenigstens eines Schweißparameters aus der Gruppe umfassend Schweißspannung, Schweißstrom, Drahtvorschub, Schutzgasmenge, Drahtdrehmotorstrom, |
| a2) | Defekterkennung an der in Schritt a1) fertigen Schweißnaht, |
| a3) | Verwenden der Daten aus Schritt a1) und a2) zum Trainieren eines Netzwerkes. |

Erfindungsgemäß ist das Netzwerk ein LSTM-Netzwerk.

Der Anlernvorgang dient dazu ein Netzwerk mit Daten eines Schweißvorgangs zu trainieren und den Daten fehlerfreie und fehlerhafte Schweißergebnisse zuzuordnen. Dazu werden Daten während des Schweißvorgangs kontinuierlich, punktuell oder zeitweise erfasst und gespeichert. Gleichzeitig wird die Position der Schweißvorgangs ebenfalls erfasst oder ermittelbar festgestellt, derart, dass die Position dem jeweiligen Parametersatz zugeordnet werden kann. Im Idealfall wird die Position gleichzeitig mit den Daten ermittelt und beide Daten gleichzeitig als Datensatz abgespeichert. Alternativ kann auch eine spätere Zuordnung erfolgen.

Insbesondere zum Anlernen kann es vorteilhaft sein, einzelne Fehler absichtlich zu erzeugen. In diesem Fall kann ein rein punktuelles Schweißen erfolgen. Das Erfassen der Schweißposition in Schritt a1.1) ergibt sich dann direkt aus dem erzeugten Defekt, sodass unmittelbar und ohne einen zusätzlichen Erfassungsschritt die Schweißparameter dem Defekt zugeordnet werden können.

Die Erfassung der Schweißposition in Schritt a1.1) erfolgt in Bezug zur Schweißnaht und muss lediglich derart erfolgen, dass eine spätere Zuordnung zwischen den in Schritt a1.2) erfassten Daten und einem in Schritt a2) erkannten Defekt möglich ist. Wenn man von einer konstanten Schweißgeschwindigkeit ausgeht, würde die Erfassung der Startposition und die Zeit bereits ausreichend sein, um die Ereignisse des Schweißvorgangs der Schweißnaht zuzuordnen. Es kann sich aber auch um eine kontinuierliche Positionserfassung handeln, die während des Schweißvorgangs die Position erfasst. Die Positionserfassung kann optisch (einschließlich infrarot), per Ultraschall oder Radar erfolgen.

Wird in Schritt a1.2) mehr als ein Schweißparameter erfasst, was bevorzugt ist, so werden alle erfassten Schweißparameter in Schritt a3) verwendet.

Die Defekterkennung in Schritt a2) erfolgt üblicherweise getrennt in einem nachträglichen Inspektionsschritt. Beispielsweise und bevorzugt wird die fertige Schweißnaht mittels Röntgen untersucht und manuell bewertet und Defekte erkannt und zugeordnet. Werden Defekte erkannt muss üblicherweise die Schweißnaht aufgetrennt und erneut angefertigt werden. Ziel ist es gerade diesen aufwändigen Schritt möglichst zu vermeiden oder im Aufwand wenigstens zu reduzieren. Auch im Schritt a2) muss naturgemäß eine Positionszuordnung möglich sein. Bei bildgebenden Verfahren ist die Position in den Bilddaten mit erfasst. Bei anderen Verfahren kann die Position auch über einen Startpunkt und eine Zeit- oder Bewegungsinformation erfasst werden. Ebenso kann die Positionsbestimmung während der Defekterkennung ähnlich zur Positionserfassung in Schritt a1.1) erfolgen.

In Schritt a3) werden Daten aus dem Erfassungsschritt zumindest teilweise einem Netzwerk zugeführt, um dieses Netzwerk auf die Erkennung von Defekten zu trainieren.

Unter einem Netzwerk ist im Sinne der Erfindung wird dabei eine Einrichtung zum maschinellen Lernen verstanden, insbesondere ist damit ein neuronales Netzwerk gemeint. Die Daten werden also mittels Sensoren am Werkstück oder der Schweißvorrichtung erfasst und einer Datenverarbeitungsvorrichtung zugeführt, die ein neuronales Netzwerk oder eine Einrichtung zum maschinellen Lernen bildet, welche die Daten verarbeitet. Die Zuführung von Daten zum Netzwerk, die zu Fehlern oder keinen Fehlern führen, führt zu einem Training des Netzwerkes und somit zur Optimierung von Fehlererkennungsmöglichkeiten des Netzwerkes. Für dieses Verfahren eignet sich als neuronales Netzwerk besonders ein LSTM-Netzwerk. LSTM steht für Long short-term memory (deutsch: langes Kurzzeitgedächtnis). LSTM-Netzwerke haben sich bei der Bilderkennung als vorteilhaft erwiesen, eignen sich jedoch auch für dieses Verfahren, auch wenn die in Schritt a1.2) erfassten Daten keine Bilddaten sind. Bevorzugt ist das LSTM-Netzwerk ein faltungsbasiertes neuronales Netzwerk. Der geläufige englischsprachige Terminus für ein faltungsbasiertes neuronales Netzwerk ist Convolutional neuronal network. Daher ist das Netzwerk bevorzugt ein LSTM-Netzwerk.

In einer bevorzugten Ausführungsform ist das LSTM-Netzwerk ein LSTM mit einem Tiefpass-Filter. Das Verhalten des LSTM-Netzwerks könnte auch als Tiefpass beschrieben werden. Übergänge benötigen etwas Zeit, sind dafür aber stabiler. Kurzfristige Änderungen in einer einzelnen Messung werden unterdrückt. Dieses Tiefpassverhalten ist auf die Struktur einer LSTM-Zelle zurückzuführen. Zur Datenreduktion können die erfassten Daten daher vorab auch durch einen Tiefpass-Filter laufen, um die Datenmenge zu reduzieren.

In einer bevorzugten Ausführungsform ist das LSTM-Netzwerk ein LSTM mit Wavelet Transformation. Als wirksame Datenvorverarbeitungsmethode bietet die Wavelet-Analyse eine Zeit-Frequenz-Darstellung von Signalen mit vielen verschiedenen Perioden im Zeitbereich. Sie kann Zeitreihendaten in ungefähre und detaillierte Teile zerlegen, um potenzielle Informationen aus verrauschten Daten zu extrahieren. Die Idee der Wavelet-Transformation besteht darin, die ursprüngliche Sequenz in verschiedene Teilsequenzen zu zerlegen, um detaillierte Informationen über die Multiskaleneigenschaften von Zeitreihen zu erhalten. Die übergeordnete Funktion der Wavelet-Transformation besteht darin, Informationen über Zeit, Ort und Frequenz eines Signals gleichzeitig wiederzugeben. Die Wavelet-Transformation wird im Allgemeinen in die kontinuierliche Wavelet-Transformation (CWT) und die diskrete Wavelet-Transformation (DWT) unterteilt. Die verarbeitete und mit Wavelets zerlegte Sub-Zeitreihe wird als Eingabe für das LSTM-Modell verwendet, um die Ausgabe zu verbessern. Als Wavelet-Funktion können beispielsweise Wavelets der Daubechies-Familie (dbN, N steht für die Anzahl der verschwindenden Momente), Meyer-Wavelets oder Haar-verwendet werden.

In einer bevorzugten Ausführungsform werden keine gelabelten Daten verwendet. Es handelt sich um so genanntes unüberwachtes Lernen. Der Vorteil ist, dass üblicherweise die nicht gelabelten Daten in wesentlich größerer Menge zur Verfügung stehen.

Das Verfahren umfasst somit einen Schritt des maschinellen Lernens. Nur dadurch ist es möglich, später dieses Wissen in Echtzeit während des Schweißprozesses abzurufen.

Der Überwachungsvorgang b) weist die folgenden Schritte auf:

| | |
|---|---|
| b1) | Erzeugen einer manuellen Schweißnaht und dabei |
| b1.1) | Erfassen wenigstens eines Schweißparameters aus der Gruppe umfassend Schweißspannung, Schweißstrom, Drahtvorschub, Schutzgasmenge, Drahtdrehmotorstrom |
| b2) | Verwenden des in Schritt a3) trainierten Netzwerkes und der in Schritt b1.1) erfassten Schweißparameter zur Vorhersage, ob an der gerade geschweißten Stelle ein Defekt der Schweißnaht zu erwarten ist. |

Bevorzugt sind der in Schritt a1.2) und Schritt b1.1) erfasste Schweißparameter identisch. Besonders bevorzugt wird mehr als ein Schweißparameter erfasst. Ziel ist es, aus Schwankungen, beispielsweise im Schweißstrom insbesondere beispielsweise in Kombination mit dem Drahtvorschub auf eine geänderte Menge an eingebrachtem Material zu schließen, was wiederum am Ende zu einem Defekt führen könnte. Ansatz ist, dass Schwankungen, welche bereits zu einem Defekt geführt haben, erneut zu einem Defekt führen können. Da es aber ein händischer Prozess ist, unterliegt dieser sowieso Schwankungen, was eine einfache Auswertung nur der Schweißparameter erschwert.

Das im Schritt a) trainierte oder optimierte Netzwerk wird derart verwendet, dass die erfassten Schweißparameter des in Schritt b) stattfindenden erzeugen der Schweißnaht dem Netzwerk zugeführt werden. Das Zuführen der Schweißparameter kann dabei während des Erzeugen der Schweißnaht erfolgen oder erst nach Abschluss des Schweißens. Das Netzwerk bewertet diese Daten dahingehend, ob ein Fehler erzeugt wird oder nicht und gibt diese Bewertung als Ergebnis oder Vorhersage aus. Ob tatsächlich ein Fehler vorliegt, kann erst in einem nachgelagerten Analyseprozess bestätigt werden. Beispielsweise kann eine Schwankung im Schweißstrom auf eine Veränderung des Abstandes des Schweißgerätes hindeuten. Wird also beispielsweise das Schweißgerät unbewusst vom Werkstück entfernt, kann die Schweißnaht zu schwach werden und ein Defekt entsteht. Grundgedanke der Erfindung ist nun, eine solche Tendenz, beispielsweise eine ungewollte Entfernung vom Werkstück, durch eine Veränderung, beispielweise im Schweißstrom zu erkennen. Ebenso können Materialschwankungen im Werkstück beispielsweise die Leitfähigkeit oder die Wärmeleitfähigkeit verändern, was ebenfalls zu einer erfassbaren Änderung beispielsweise des Schweißstromes führt. Entscheidend ist dabei durch Training die Schwankungen zu erkennen, die unvermeidlich sind, zum Beispiel auch das digitale Rauschen der erfassten Messwerte, und keinen Einfluss auf das Ergebnis haben und nur solche Ereignisse zu erkennen, die einen Einfluss auf die Qualität der Schweißnaht haben.

Durch das erfindungsgemäße Verfahren ist es nun in situ möglich, Situationen zu erkennen, in denen ein Defekt entsteht oder Situationen zu erkennen die zu einem Defekt führen und somit eine Defektentstehung zu verhindern. Dadurch ist es möglich, die Schweißnaht zu einem früheren Zeitpunkt zumindest teilweise wieder aufzutrennen und erneut anzufertigen, wodurch deutlich weniger Arbeit verloren geht.

In einer weiteren Ausführungsform der Erfindung weist der Anlernvorgang a) zusätzlich den Schritt auf:

| | |
|---|---|
| a1.3) | Erfassen wenigstens eines Handparameters des Schweißers, wobei der Handparameter ausgewählt ist aus der Gruppe umfassen Lage und Beschleunigung. |

In Schritt a3) werden zusätzlich die Daten aus Schritt a1.3) verwendet. Somit wird das Netzwerk, insbesondere das LSTM-Netzwerk, auch auf diese Parameter trainiert.

Der Überwachungsvorgang weist zusätzlich den Schritt auf:

| | |
|---|---|
| b1.2) | Erfassen wenigstens eines Handparameters des Schweißers, wobei der Handparameter ausgewählt ist aus der Gruppe umfassen Lage und Beschleunigung. |

In Schritt b2) werden zusätzlich die Daten aus Schritt b1.2) verwendet.

Durch die Erfassung eines Handparameters ist eine erhebliche Verbesserung möglich, da neben den reinen maschinenbezogenen Werten auch die Bewegung des Schweißers beziehungsweise des Schweißgeräts erfasst und berücksichtigt wird. Die Lage kann dabei die Orientierung im Raum sein, also beispielsweise in Bezug auf eine horizontale oder vertikale Ausrichtung oder in Bezug auf die Naht oder in Bezug auf zumindest einen Referenzpunkt im Raum. Dieses ist besonders bevorzugt, da Schwankungen der Handparameter auch Schwankungen in den Schweißparametern bewirken und diese entweder ausgleichen oder verstärken können.

Hierbei kann der Sensor zur Erfassung der Handparameter in das Schweißgerät integriert sein. Alternativ oder zusätzlich kann dieser beispielsweise in Form eines Handschuhs auch direkt auf der Hand des Schweißers angeordnet sein. Es können auch mehrere Sensoren vorgesehen sein, beispielsweise am Schweißgerät und an der Hand, um eine Orientierung besser erfassen zu können. Ebenso kann eine externe Erfassungsvorrichtung vorgesehen sein, beispielsweise am Versorgungsgerät des Schweißgerätes.

In einer weiteren Ausführungsform der Erfindung wird als weiterer Handparameter die Position erfasst. Hierzu wird vorzugsweise eine weitere zusätzliche Erfassungsvorrichtung eingesetzt. Beispielsweise kann die Hand des Schweißers (beispielsweise mittels eines Handschuhs) und/oder das Schweißgerät Markierungen für ein Motion Capture Verfahren aufweisen.

In einer weiteren Ausführungsform der Erfindung weist das Schweißgerät einen Abstandssensor auf, welcher den Abstand vom Schweißgerät zum zu schweißenden Werkstück erfasst. Der Abstand wird als Schweißparameter in den Schritten a1.2) und b1.1) erfasst.

In einer weiteren Ausführungsform der Erfindung weist der Anlernvorgang a) zusätzlich den Schritt auf:

| | |
|---|---|
| a1.4) | Erfassen der Person des Schweißers oder einem der Person des Schweißers eindeutig zugeordneten Identifikators. |

Die Erfassung lediglich eines der Person des Schweißers eindeutig zugeordneten Identifikators ermöglich die Datenerfassung und Verwendung unter Vermeidung der Leistungserfassung eines Mitarbeiters und vermeidet somit rechtliche Probleme.

Die Person kann ein entscheidender Einflussfaktor sein. So gibt es insbesondere Rechtshänder und Linkshänder. Daher ist zu erwarten, dass die Handbewegungen unterschiedlich (und in erster Näherung gespiegelt) ablaufen. Auch ist zu erwarten, dass gerade bei gekrümmten Bauteilen, problematische und damit defektanfällige Stellen auch entsprechend spiegelsymmetrisch zueinander sind. Es ist daher hilfreich, auch solche personenbezogenen Daten zu berücksichtigen und damit beispielsweise die Händigkeit des Schweißers zu berücksichtigen.

In Schritt a3) werden zusätzlich die Daten aus Schritt a1.4) zum Training des Netzwerks, insbesondere des LSTM-Netzwerkes, verwendet.

Der Überwachungsvorgang weist zusätzlich den Schritt auf:

| | |
|---|---|
| b1.3) | Erfassen der Person des Schweißers oder einem der Person des Schweißers eindeutig zugeordneten Identifikators. |

In Schritt b2) werden zusätzlich die Daten aus Schritt b1.3) verwendet.

Es kann vorgesehen sein, dass für jede erfasste Person in Schritt a1.4) ein eigener Datensatz zum Training des Netzwerks, insbesondere des LSTM-Netzwerks, erzeugt wird. In Schritt b2 kann auf den Datensatz der in b1.3) erfassten Person zurückgegriffen werden und dieser genutzt werden.

In einer weiteren Ausführungsform der Erfindung erfolgt die Defekterkennung in Schritt a2) manuell. Damit sind die Defekte überwacht zugeordnet, es handelt sich also um ein überwachtes Lernen. Gleichzeitig könnte auch ein weiteres neuronales Netzwerk trainiert werden, um die Defekterkennung oder wenigstens die Erkennung von Verdachtsregionen, welche Defekte aufweisen können, ebenfalls zu automatisieren oder wenigstens die Bedarfszeit für einen Experten zur Defekterkennung zu minimieren.

In einer weiteren Ausführungsform der Erfindung wird das Ergebnis aus Schritt b1.2) dem Schweißer in Echtzeit visuell übermittelt. Beispielsweise kann dieses in den Helm oder das Schutzvisier eingeblendet werden. Da ein Schweißer immer eine entsprechende Augen-Schutz-Vorrichtung trägt, kann diese in sehr effizienter Wiese als Anzeige verwendet werden. Um den Schweißer möglichst wenig abzulenken, kann in einer bevorzugten Ausführungsform vorgesehen sein, das Ergebnis in Form einer Farbskale visuell zu übermittelt, beispielsweise in Form einer Ampel (grün = ok, gelb = Achtung, rot = Defekt). Die Farbskala kann aber auch in einem fließenden Farbverlauf das Risikoniveau detaillierter anzeigen und ist wesentlich einfacher kognitiv zu erfassen als eine zahlenmäßige Darstellung. Es kann dabei auch vorgesehen sein, dass die visuelle Darstellung erhöhter Risiken für Defekte etwas verlängert dargestellt wird als das Ereignis vorliegt, um den Wahrnehmungszeitraum zu verlängern und somit die Gefahr für ein Übersehen des Ereignisses zu verringern.

In einer weiteren Ausführungsform der Erfindung weist das Verfahren zusätzlich einen Vorhersagevorgang c) auf. Der Vorhersagevorgang c) weist die folgenden Schritte auf:

| | |
|---|---|
| c1) | Verwenden des in Schritt a3) trainierten Netzwerkes zur Vorhersage der Schweißnahtqualität für einen Vorhersagezeitraum. |
| c2) | Rückmeldung an den Schweißer, wenn mit einem Defekt im Vorhersagezeitraum zu rechnen ist. |

Es geht also um die Erkennung von Abweichungen, die einem Defekt unmittelbar vorausgehen können. Beispielsweise könnte eine Schwankung in der Schweißspannung zu einer Änderung des Schweißstromes führen, die der Schweißer in einer veränderten Wärmeentwicklung beim Schweißen wahrnimmt und gegebenenfalls instinktiv gegensteuert. Wenn dann die Schwankung der Schweißspannung wieder zurückgeht, kann es einer Überhöhung des Effekts durch die Korrektur des Schweißers kommen. Solche Effekte lassen sich gerade durch maschinelles Lernen gut erkennen, sodass eine Vorhersage, auch wenn üblicherweise nur für einen sehr kurzen Vorhersagezeitraum, möglich wird. Daher wird der Vorhersagevorgang c) bevorzugt für einen Vorhersagezeitraum von bis zu 2 s durchgeführt. Es hat sich gezeigt, dass eine zeitliche Beschränkung die Vorhersagequalität positiv beeinflusst. Sinnvollerweise wird der Vorhersagevorgang innerhalb des Überwachungsvorgangs b) ausgeführt.

In einer weiteren Ausführungsform der Erfindung werden in Schritt a1.2) und in Schritt b1.1) die Schweißparameters Schweißspannung, Schweißstrom, Drahtvorschub, Schutzgasmenge und Drahtdrehmotorstrom erfasst. Die Erfassung möglichst vieler Schweißparameter ermöglichst ein möglichst präzises Wiedererkennen vergleichbarer Situationen. Diese genannten Parameter haben sich alle als sinnvoll und zueinander ergänzend erwiesen.

In einer weiteren Ausführungsform der Erfindung werden in Schritt a1.3) und in Schritt b1.2) die Handparameter des Schweißers Lage und Beschleunigung erfasst. Auch hier ist die Erfassung beider Parameter vorteilhaft, um die Datengrundlage zu verbessern und somit ein möglichst präzises Wiedererkennen vergleichbarer Situationen zu erleichtern.

In einer weiteren Ausführungsform der Erfindung erfolgt die Erfassung der Daten in den Schritten a1.2) und b1.1) sowie in den optionalen Schritten a1.3) und b1.2) in einem Intervall von 5 ms bis 100 ms, bevorzugt in einem Intervall von 15 ms bis 50 ms. Dieses hat sich als ein Zeitfenster erwiesen, in dem signifikante Daten erfasst werden, ohne unnötigen Datenmüll (beispielsweise durch statistisches Rauschen bei extrem kurzen Zeitintervallen) zu verarbeiten.

In einer weiteren Ausführungsform der Erfindung erfolgt die Defekterkennung an der fertigen Schweißnaht in Schritt a2) mit Hilfe von Röntgen. Es wird also eine Röntgenuntersuchung von der Schweißnaht durchgeführt und das Ergebnis insbesondere durch einen Fachmann bewertet und Defekte lokalisiert.

In einer weiteren Ausführungsform der Erfindung weist der Überwachungsvorgang b) zusätzlich den folgenden Schritt auf:

| | |
|---|---|
| b1.4) | Erfassen der Schweißposition. |

Analog zur Erfassung der Schweißposition in Schritt a1.1) muss auch hier die Erfassung der Schweißposition derart erfolgen, dass eine spätere Zuordnung zwischen den in Schritt b1.4) erfassten Daten und einem im Überprüfungsvorgang d) erkannten Defekt möglich ist. Wenn man von einer perfekten konstanten Schweißgeschwindigkeit ausgeht, würde die Erfassung der Startposition und die Zeit bereits ausreichend sein. Die Positionserfassung kann optisch (einschließlich infrarot), per Ultraschall oder Radar erfolgen.

Hierdurch ist ein späterer Abgleich zwischen den Daten und erkannten Defekten möglich.

In einer weiteren Ausführungsform der Erfindung schließt sich an den Überwachungsvorgang b) ein Überprüfungsvorgang d) an. Eine Qualitätsüberprüfung der fertigen Schweißnaht wird bei Produkten üblicherweise standardgemäß durchgeführt, bei denen ein Versagen nicht akzeptabel wäre, beispielsweise bei dem Druckkörper eines Unterseebootes. Der Überprüfungsvorgang d) weist die folgenden Schritte auf:

| | |
|---|---|
| d1) | Defekterkennung an der in Schritt b1) fertigen Schweißnaht. |

Zu dieser üblichen Überprüfung der Produktqualität tritt anschließend ein fortwährendes weiteres Training des Netzwerks an, indem zusätzlich noch ein Trainingsschritt durchgeführt wird:

| | |
|---|---|
| d2) | Verwenden der Daten aus Schritt b1) und d1) zum erneuten Trainieren des in Schritt a3) trainierten Netzwerks, insbesondere des LSTM-Netzwerkes. |

In einer weiteren Ausführungsform der Erfindung werden in Schritt a3) zusätzliche Trainingsdaten verwendet. Diese zusätzlichen Trainingsdaten werden generiert aus den Daten aus Schritt a1) und a2). Bevorzugt werden diese zusätzlichen Trainingsdaten nur für Defekte generiert. Beispielsweise und bevorzugt werden die zusätzlichen Trainingsdaten aus den ursprünglichen Daten dadurch erzeugt, dass ein Verfahren ausgewählt aus der Gruppe umfassend Aufprägen von Rauschen, Verschieben wenigstens einer Messwertreihe, Anwenden einer Fenster-Funktion auf die ursprünglichen Daten angewendet wird. Beispielsweise werden die ursprünglich gemessenen Daten des Schweißstroms genommen und ein neuer Datensatz erzeugt, in dem auf den Schweißstrom ein Rauschen addiert wird. Unter Verschieben wenigstens einer Messwertreihe wird verstanden, dass der Zahlenwert einheitlich geändert wird, also beispielsweise alle Werte des Schweißstroms halbiert werden. Als besonders geeignete Fenster-Funktion hat sich das Von-Hann-Fenster erwiesen. Das Von-Hann-Fenster basiert auf einer Überlagerung von drei spektral gegeneinander verschobenen si-Funktionen um gegenüber dem Rechteck-Fenster mit nur einer si-Funktion im Spektrum eine stärkere Unterdrückung der Nebenkeulen zu erreichen. Der Nachteil ist eine Reduktion in der Frequenzauflösung.

In einer weiteren Ausführungsform der Erfindung ist das in Schritt a3) trainierte Netzwerk, insbesondere das LSTM-Netzwerk, darauf optimiert, keinen nicht vorhandenen Defekt als Defekt zu identifizieren, es geht also um die Vermeidung der Erkennung eines angeblichen Defekts, der in Wahrheit nicht existiert. Bei solchen Verfahren ist immer eine Optimierung zu finden, die fälschlich nicht erkannte Defekte (false acceptance, Schweißnaht wird fälschlich für gut befunden) und falsch erkannte, aber nicht vorhandene Defekte (false rejection, Schweißnaht wird fälschlich als defekt zurückgewiesen) gegeneinander abwägt. Für das hier vorliegende Problem soll das erfindungsgemäße Verfahren Defekte frühzeitig erkennen, sodass diese mit einem geringeren Aufwand korrigiert werden können. Wird ein Defekt nicht erkannt, so fällt dieser in der Endkontrolle auf und gegenüber nicht Nicht-Anwendung des erfindungsgemäßen Verfahrens wird nichts verloren. Würde jedoch fälschlicher Weise ein Defekt erkannt werden, wo keiner ist, so würde dadurch ein Mehraufwand entstehen. Daher ist das Verfahren so zu optimieren, dass die false rejection rate minimal ist.

Nachfolgend ist das erfindungsgemäße Verfahren anhand eines in der Zeichnung dargestellten Ausführungsbeispiels näher erläutert.

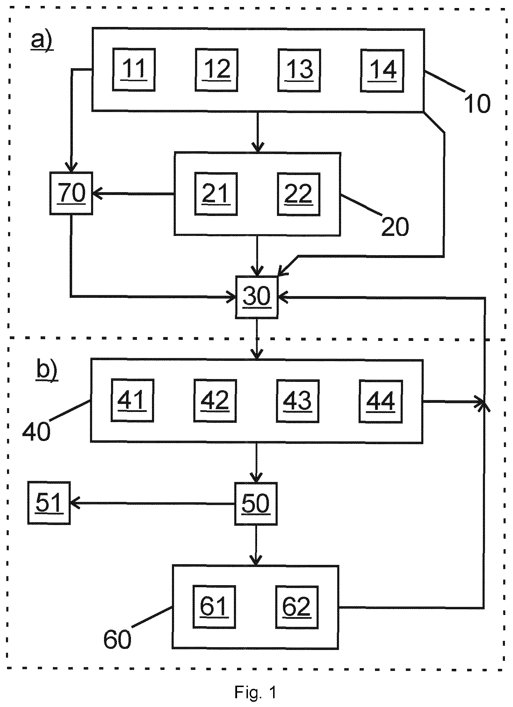

### Fig. 1 Flussdiagramm

In Fig. 1 ist ein Flussdiagramm des erfindungsgemäßen Verfahrens in einer beispielhaften Ausführungsform dargestellt.

Das Verfahren gliedert sich grob in zwei Schritte, den Anlernvorgang a) und den Überwachungsvorgang b).

Im Anlernvorgang erzeugt ein Schweißer manuell eine Schweißnaht (10). Dabei wird zum einen die jeweils aktuelle Position erfasst (11). Ebenso werden die Schweißparameter (12) Schweißspannung, Schweißstrom, Drahtvorschub, Schutzgasmenge, Drahtdrehmotorstrom, die Handparameter (13) Lage und Beschleunigung und die Person des Schweißers oder einem der Person des Schweißers eindeutig zugeordneten Identifikators (14) erfasst. Während die jeweils aktuelle Position, die Schweißparameter (12) Schweißspannung, Schweißstrom, Drahtvorschub, Schutzgasmenge, Drahtdrehmotorstrom und die Handparameter (13) Lage und Beschleunigung kontinuierlich erfasst werden, kann die Person des Schweißers oder einem der Person des Schweißers eindeutig zugeordneten Identifikators (14) einmalig, beispielsweise durch einen Anmeldevorgang, beispielsweise vor Beginn der Arbeit, erfasst werden.

In einem zweiten Schritt erfolgt dann eine Defekterkennung (20) an der fertigen Schweißnaht. Hierzu erfolgt insbesondere eine Röntgenerfassung (21) der Schweißnaht, welche anschließend ausgewertet (22) wird. Defekte werden entsprechend ausgewiesen.

Die Daten der Erzeugung der Schweißnaht 10 und der Defekterkennung 20 werden zusammengeführt, um ein LSTM-Netzwerk zu trainieren 30. Wenn man zusätzliche Trainingsdaten generieren möchte kann zur Erzeugung zusätzlicher Trainingsdaten (70) beispielsweise weißes Rauschen auf die bei der Erzeugung einer manuellen Schweißnaht 10 erfassten Daten aufaddiert werden, um so die Anzahl der Trainingsdatensätze für Defekte zu erhöhen.

Das so trainierte LSTM-Netzwerk wird dann beim Überwachungsvorgang b) verwendet. Hier wird nun eine Schweißnaht manuell erzeugt (40). Dabei werden erneut die jeweils aktuelle Position (41), die Schweißparameter (42) Schweißspannung, Schweißstrom, Drahtvorschub, Schutzgasmenge, Drahtdrehmotorstrom, die Handparameter (43) Lage und Beschleunigung und die Person des Schweißers oder einem der Person des Schweißers eindeutig zugeordneten Identifikators (44) erfasst. Mit den aktuell erfassten Daten erfolgt dann in Echtzeit eine Vorhersage 50 über die zu erwartende Qualität der Schweißnaht. Das Ergebnis kann an eine Ausgabe 51 gegeben werden, beispielsweise ein Display im Sichtschutz des Schweißers. Die Ausgabe kann beispielsweise entweder in Form einer rot - gelb - grün - Farbcodierung erfolgen oder nur als Warnhinweis, wenn ein Fehler zu erwarten ist (quasi nur rot).

Um das System kontinuierlich zu verbessern, werden die bei der Qualitätsüberprüfung der Schweißnaht bei der durchgeführte Defekterkennung 60 erfassten Daten zusammen mit den beim Erzeugen der manuellen Schweißnaht 40 erfassten Daten wieder zum Trainieren des LSTM-Netzwerkes 30 verwendet. Beispielsweise und insbesondere umfasst die Defekterkennung 60 erneut eine Röntgenerfassung 61 und anschließend eine manuelle Auswertung 62 der erfassten Röntgendaten.

### Bezugszeichen

- a): Anlernvorgang
- b): Überwachungsvorgang
- 10: Erzeugen einer manuellen Schweißnaht
- 11: Erfassen der Schweißposition
- 12: Erfassen der Schweißparameter
- 13: Erfassen der Handparameter
- 14: Erfassen der Person
- 20: Defekterkennung
- 21: Röntgenerfassung
- 22: Auswertung
- 30: Trainieren des Netzwerkes
- 40: Erzeugen einer manuellen Schweißnaht
- 41: Erfassen der Schweißposition
- 42: Erfassen der Schweißparameter
- 43: Erfassen der Handparameter
- 44: Erfassen der Person
- 50: Vorhersage
- 51: Ausgabe
- 60: Defekterkennung
- 61: Röntgenerfassung
- 62: Auswertung
- 70: Erzeugung zusätzlicher Trainingsdaten

## Patentansprüche

1. Verfahren zum Vorhersagen der Qualität einer manuell gefertigten Schweißnaht, wobei das Verfahren einen Anlernvorgang a) und einen Überwachungsvorgang b) aufweist, wobei der Anlernvorgang a) die folgenden Schritte aufweist:
| | |
|---|---|
| a1) | Erzeugen einer manuellen Schweißnaht (10) und dabei |
| a1.1) | Erfassen der Schweißposition (11), |
| a1.2) | Erfassen wenigstens eines Schweißparameters (12) aus der Gruppe umfassend Schweißspannung, Schweißstrom, Drahtvorschub, Schutzgasmenge, Drahtdrehmotorstrom, |
| a2) | Defekterkennung (20) an der in Schritt a1) fertigen Schweißnaht, |
| a3) | Verwenden der Daten aus Schritt a1) und a2) zum Trainieren eines Netzwerkes (30), wobei das Netzwerk ein LSTM-Netzwerk ist, |
wobei der Überwachungsvorgang b) die folgenden Schritte aufweist:
| | |
|---|---|
| b1) | Erzeugen einer manuellen Schweißnaht (40) und dabei |
| b1.1) | Erfassen wenigstens eines Schweißparameters (42) aus der Gruppe umfassend Schweißspannung, Schweißstrom, Drahtvorschub, Schutzgasmenge, Drahtdrehmotorstrom |
| b2) | Verwenden des in Schritt a3) trainierten Netzwerkes und der in Schritt b1.1) erfassten Schweißparameter zur Vorhersage (50), ob an der gerade geschweißten Stelle ein Defekt der Schweißnaht zu erwarten ist. |

2. Verfahren nach Anspruch 1, **dadurch gekennzeichnet, dass** der Anlernvorgang a) zusätzlich den Schritt aufweist:
| | |
|---|---|
| a1.3) | Erfassen wenigstens eines Handparameters (13) des Schweißers, wobei der Handparameter ausgewählt ist aus der Gruppe umfassend Lage und Beschleunigung, |
wobei in Schritt a3) zusätzlich die Daten aus Schritt a1.3) verwendet werden,
wobei der Überwachungsvorgang zusätzlich den Schritt aufweist:
| | |
|---|---|
| b1.2) | Erfassen wenigstens eines Handparameters (43) des Schweißers, wobei der Handparameter ausgewählt ist aus der Gruppe umfassend Lage und Beschleunigung, |
wobei in Schritt b2) zusätzlich die Daten aus Schritt b1.2) verwendet werden.

3. Verfahren nach einem der vorstehenden Ansprüche, **dadurch gekennzeichnet, dass** der Anlernvorgang a) zusätzlich den Schritt aufweist:
| | |
|---|---|
| a1.4) | Erfassen der Person des Schweißers oder einem der Person des Schweißers zugeordneten Identifikators (14), |
wobei in Schritt a3) zusätzlich die Daten aus Schritt a1.4) verwendet werden,
wobei der Überwachungsvorgang zusätzlich den Schritt aufweist:
| | |
|---|---|
| b1.3) | Erfassen der Person des Schweißers oder einem der Person des Schweißers zugeordneten Identifikators (44), |
wobei in Schritt b2) zusätzlich die Daten aus Schritt b1.3) verwendet werden.

4. Verfahren nach einem der vorstehenden Ansprüche, **dadurch gekennzeichnet, dass** die Defekterkennung (20) in Schritt a2) manuell erfolgt.

5. Verfahren nach einem der vorstehenden Ansprüche, **dadurch gekennzeichnet, dass** das Ergebnis aus Schritt b1.2) dem Schweißer in Echtzeit visuell übermittelt wird.

6. Verfahren nach Anspruch 5, **dadurch gekennzeichnet, dass** das Ergebnis in Form einer Farbskale visuell übermittelt wird.

7. Verfahren nach einem der vorstehenden Ansprüche, **dadurch gekennzeichnet, dass** das Verfahren zusätzlich einen Vorhersagevorgang c) aufweist, wobei der Vorhersagevorgang c) die folgenden Schritte aufweist:
| | |
|---|---|
| c1) | Verwenden des in Schritt a3) trainierten Netzwerkes zur Vorhersage der Schweißnahtqualität, |
| c2) | Rückmeldung an den Schweißer, wenn mit einem Defekt zu rechnen ist. |

8. Verfahren nach Anspruch 7, **dadurch gekennzeichnet, dass** der Vorhersagevorgang c) für einen Zeitraum von bis zu 2 s durchgeführt wird.

9. Verfahren nach einem der vorstehenden Ansprüche, **dadurch gekennzeichnet, dass** in Schritt a1.2) und in Schritt b1.1) die Schweißparameters Schweißspannung, Schweißstrom, Drahtvorschub, Schutzgasmenge und Drahtdrehmotorstrom erfasst werden.

10. Verfahren nach Anspruch 2 oder einem auf Anspruch 2 rückbezogenen Anspruch, **dadurch gekennzeichnet, dass** in Schritt a1.3) und in Schritt b1.2) die Handparameter des Schweißers Lage und Beschleunigung erfasst werden.

11. Verfahren nach einem der vorstehenden Ansprüche, **dadurch gekennzeichnet, dass** die Erfassung der Daten in den Schritten a1.2) und b1.1) sowie in den optionalen Schritten a1.3) und b1.2) in einem Intervall von 5 ms bis 100 ms, bevorzugt in einem Intervall von 15 ms bis 50 ms, erfolgt.

12. Verfahren nach einem der vorstehenden Ansprüche, **dadurch gekennzeichnet, dass** die Defekterkennung (20) an der fertigen Schweißnaht in Schritt a2) mit Hilfe von Röntgen erfolgt.

13. Verfahren nach einem der vorstehenden Ansprüche, **dadurch gekennzeichnet, dass** der Überwachungsvorgang b) die zusätzlich den folgenden Schritt aufweist:
| | |
|---|---|
| b1.4) | Erfassen der Schweißposition (12). |

14. Verfahren Anspruch 13, **dadurch gekennzeichnet, dass** sich an den Überwachungsvorgang b) ein Überprüfungsvorgang d) anschließt, wobei der Überprüfungsvorgang d) die folgenden Schritte aufweist:
| | |
|---|---|
| d1) | Defekterkennung (40) an der in Schritt b1) fertigen Schweißnaht, |
| d2) | Verwenden der Daten aus Schritt b1) und d1) zum erneuten Trainieren des in Schritt a3) trainierten Netzwerkes (30). |

15. Verfahren nach einem der vorstehenden Ansprüche, **dadurch gekennzeichnet, dass** in Schritt a3) zusätzliche Trainingsdaten verwendet werden, wobei die zusätzlichen Trainingsdaten generiert werden aus den Daten aus Schritt a1) und a2).

16. Verfahren nach Anspruch 15, **dadurch gekennzeichnet, dass** die zusätzlichen Trainingsdaten nur für Defekte generiert werden.

17. Verfahren nach einem der Ansprüche 15 bis 16, **dadurch gekennzeichnet, dass** die zusätzlichen Trainingsdaten erzeugt (70) werden durch ein Verfahren ausgewählt aus der Gruppe umfassend Aufprägen von Rauschen, Verschieben wenigstens einer Messwertreihe, Anwenden einer Fenster-Funktion.

18. Verfahren nach einem der vorstehenden Ansprüche, **dadurch gekennzeichnet, dass** das in Schritt a3) trainierte Netzwerk darauf optimiert ist, keinen nicht vorhandenen Defekt als Defekt zu identifizieren.

## Claims

1. Method for predicting the quality of a manually-produced weld seam, wherein the method comprises a training process a) and a monitoring process b), wherein the training process a) comprises the following steps:
| | |
|---|---|
| a1) | creating a manual weld seam and in so doing |
| a1.1) | identifying the welding position (11), |
| a1.2) | acquiring at least one welding parameter (12) from the group comprising welding voltage, welding current, wire feed rate, amount of protective gas, wire rotary motor current, |
| a2) | defect detection (20) at the weld seam produced in step a1), |
| a3) | using data from step a1) and a2) for training a network (30), wherein the network is an LSTM network, |
wherein the monitoring process b) comprises the following steps:
| | |
|---|---|
| b1) | creating a manual weld seam (40) and in so doing |
| b1.1) | acquiring at least one welding parameter (42) from the group comprising welding voltage, welding current, wire feed rate, amount of protective gas, wire rotary motor current, |
| b2) | using the network trained in step a3) and the welding parameters acquired in step b1.1) for the prediction (50) as to whether a defect in the weld seam is likely to occur at the particular point where welding has just been carried out. |

2. Method according to Claim 1, **characterized in that** the training process a) comprises in addition the step:
| | |
|---|---|
| a1.3) | acquiring at least one hand parameter (13) of the welder, wherein the hand parameter is selected from the group comprising position and acceleration, |
wherein the data from step a1.3) is used in addition in step a3),
wherein the monitoring process comprises in addition the step:
| | |
|---|---|
| b1.2) | acquiring at least one hand parameter (43) of the welder, wherein the hand parameter is selected from the group comprising position and acceleration, |
wherein the data from step b1.2) is used in addition in step b2).

3. Method according to one of the preceding claims, **characterised in that** the training process a) comprises in addition the step:
| | |
|---|---|
| a1.4) | acquiring the welder's details or an identifier (14) uniquely assigned to the particular welder, |
wherein the data from step a1.4) is used in addition in step a3),
wherein the monitoring process comprises in addition the step:
| | |
|---|---|
| b1.3) | acquiring the welder's details or an identifier (44) uniquely assigned to the particular welder, |
wherein the data from step b1.3) is used in addition in step b2).

4. Method according to one of the preceding claims, **characterised in that** defect detection (20) is performed manually in step a2).

5. Method according to one of the preceding claims, **characterised in that** the result from step b1.2) is visually transmitted to the welder in real time.

6. Method according to Claim 5, **characterised in that** the result is visually transmitted in the form of a colour scale.

7. Method according to one of the preceding claims, **characterised in that** the method comprises in addition a prediction process c), wherein the prediction process c) comprises the following steps:
| | |
|---|---|
| c1) | using the network trained in step a3) to predict weld seam quality, |
| c2) | feeding back to the welder if a defect is to be expected. |

8. Method according to Claim 7, **characterised in that** the prediction process c) is performed for a time period of up to 2 s.

9. Method according to one of the preceding claims, **characterised in that** the welding parameters comprising welding voltage, welding current, wire feed rate, amount of protective gas and wire rotary motor current are acquired in step a1.2) and in step b1.1).

10. Method according to Claim 2 or a claim that refers back to Claim 2, **characterised in that** the hand parameters of the welder comprising position and acceleration are acquired in step a1.3) and in step b1.2).

11. Method according to one of the preceding steps, **characterised in that** data is acquired in the steps a1.2) and b1.1) and in the optional steps a1.3) and b1.2) in an interval of 5 ms to 100 ms, preferably in an interval of 15 ms to 50 ms.

12. Method according to one of the preceding claims, **characterised in that** defect detection (20) is performed on the finished weld seam in step a2) with the aid of X-rays.

13. Method according to one of the preceding claims, **characterised in that** the monitoring process b) comprises in addition the following step:
| | |
|---|---|
| b1.4) | identifying the welding position (12). |

14. Method according to Claim 13, **characterised in that** an inspection process d) follows the monitoring process b), wherein the inspection process d) comprises the following steps:
| | |
|---|---|
| d1) | defect detection (40) at the weld seam produced in step b1), |
| d2) | using the data from steps b1) and d1) to retrain the network (30) trained in step a3). |

15. Method according to one of the preceding claims, **characterised in that** additional training data is used in step a3), wherein the additional training data is generated from the data from step a1) and a2).

16. Method according to Claim 15, **characterised in that** the additional training data is only generated for defects.

17. Method according to one of claims 15 to 16, **characterised in that** the additional training data is generated (70) by a method selected from the group comprising noise injection, shifting at least one series of measured values, applying a window function.

18. Method according to one of the preceding claims, **characterised in that** the network trained in step a3) is optimised to avoid identifying a non-existent defect as a defect.

## Revendications

1. Méthode pour prédire la qualité d'un cordon de soudure produit manuellement, dans laquelle la méthode comprend un processus d'entraînement a) et un processus de surveillance b), dans laquelle le processus d'entraînement a) comprend les étapes suivantes :
| | |
|---|---|
| a1) | créer un cordon de soudure manuel et ce faisant |
| a1.1) | identifier la position de soudage (11), |
| a1.2) | acquérir au moins un paramètre de soudage (12) du groupe comprenant tension de soudage, courant de soudage, vitesse d'alimentation du fil, quantité de gaz de protection, courant du moteur rotatif du fil, |
| a2) | détection de défaut (20) au niveau du cordon de soudure produit à l'étape a1), |
| a3) | utiliser des données de l'étape a1) et a2) pour l'entraînement d'un réseau (30), dans laquelle le réseau est un réseau LSTM, |
dans laquelle le processus de surveillance b) comprend les étapes suivantes :
| | |
|---|---|
| b1) | créer un cordon de soudure manuel (40) et ce faisant |
| b1.1) | acquérir au moins un paramètre de soudage (42) du groupe comprenant tension de soudage, courant de soudage, vitesse d'alimentation du fil, quantité de gaz de protection, courant du moteur rotatif du fil, |
| b2) | utiliser le réseau entraîné à l'étape a3) et les paramètres de soudage acquis à l'étape b1.1) pour la prédiction (50) quant à savoir si un défaut dans le cordon de soudure est susceptible de se produire au point particulier où le soudage vient d'être effectué. |

2. Méthode selon la revendication 1, **caractérisée en ce que** le processus d'entraînement a) comprend en outre l'étape :
| | |
|---|---|
| a1.3) | acquérir au moins un paramètre de main (13) du soudeur, dans laquelle le paramètre de main est sélectionné du groupe comprenant position et accélération, |
dans laquelle les données de l'étape a1.3) sont utilisées en outre à l'étape a3),
dans laquelle le processus de surveillance comprend en outre l'étape :
| | |
|---|---|
| b1.2) | acquérir au moins un paramètre de main (43) du soudeur, dans laquelle le paramètre de main est sélectionné du groupe comprenant position et accélération, |
dans laquelle les données de l'étape b1.2) sont utilisées en outre à l'étape b2).

3. Méthode selon l'une des revendications précédentes, **caractérisée en ce que** le processus d'entraînement a) comprend en outre l'étape :
| | |
|---|---|
| a1.4) | acquérir les informations du soudeur ou un identifiant (14) attribué de manière unique au soudeur particulier, |
dans laquelle les données de l'étape a1.4) sont utilisées en outre à l'étape a3),
dans laquelle le processus de surveillance comprend en outre l'étape :
| | |
|---|---|
| b1.3) | acquérir les informations du soudeur ou un identifiant (44) attribué de manière unique au soudeur particulier, |
dans laquelle les données de l'étape b1.3) sont utilisées en outre à l'étape b2).

4. Méthode selon l'une des revendications précédentes, **caractérisée en ce que** la détection de défaut (20) est effectuée manuellement à l'étape a2).

5. Méthode selon l'une des revendications précédentes, **caractérisée en ce que** le résultat de l'étape b1.2) est transmis visuellement au soudeur en temps réel.

6. Méthode selon la revendication 5, **caractérisée en ce que** le résultat est transmis visuellement sous la forme d'une échelle de couleurs.

7. Méthode selon l'une des revendications précédentes, **caractérisée en ce que** la méthode comprend en outre un processus de prédiction c), dans lequel le processus de prédiction c) comprend les étapes suivantes :
| | |
|---|---|
| c1) | utiliser le réseau entraîné à l'étape a3) pour prédire la qualité du cordon de soudure, |
| c2) | fournir un retour au soudeur si un défaut est à prévoir. |

8. Méthode selon la revendication 7, **caractérisée en ce que** le processus de prédiction c) est effectué pour une période de temps allant jusqu'à 2 s.

9. Méthode selon l'une des revendications précédentes, **caractérisée en ce que** les paramètres de soudage comprenant tension de soudage, courant de soudage, vitesse d'alimentation du fil, quantité de gaz de protection et courant du moteur rotatif du fil sont acquis à l'étape a1.2) et à l'étape b1.1).

10. Méthode selon la revendication 2 ou une revendication qui se réfère à la revendication 2, **caractérisée en ce que** les paramètres de main du soudeur comprenant position et accélération sont acquis à l'étape a1.3) et à l'étape b1.2).

11. Méthode selon l'une des étapes précédentes, **caractérisée en ce que** des données sont acquises dans les étapes a1.2) et b1.1) et dans les étapes optionnelles a1.3) et b1.2) dans un intervalle de 5 ms à 100 ms, de préférence dans un intervalle de 15 ms à 50 ms.

12. Méthode selon l'une des revendications précédentes, **caractérisée en ce que** la détection de défaut (20) est effectuée sur le cordon de soudure fini à l'étape a2) à l'aide de rayons X.

13. Méthode selon l'une des revendications précédentes, **caractérisée en ce que** le processus de surveillance b) comprend en outre l'étape suivante :
| | |
|---|---|
| b1.4) | identifier la position de soudage (12). |

14. Méthode selon la revendication 13, **caractérisée en ce qu'**un processus d'inspection d) suit le processus de surveillance b), dans lequel le processus d'inspection d) comprend les étapes suivantes :
| | |
|---|---|
| d1) | détection de défaut (40) au niveau du cordon de soudure produit à l'étape b1), |
| d2) | utiliser les données des étapes b1) et d1) pour réentraîner le réseau (30) entraîné à l'étape a3). |

15. Méthode selon l'une des revendications précédentes, **caractérisée en ce que** des données d'entraînement supplémentaires sont utilisées à l'étape a3), dans laquelle les données d'entraînement supplémentaires sont générées à partir des données des étapes a1) et a2).

16. Méthode selon la revendication 15, **caractérisée en ce que** les données d'entraînement supplémentaires sont générées uniquement pour des défauts.

17. Méthode selon l'une des revendications 15 à 16, **caractérisée en ce que** les données d'entraînement supplémentaires sont générées (70) par une méthode sélectionnée du groupe comprenant injection de bruit, décalage d'au moins une série de valeurs mesurées, application d'une fonction de fenêtre.

18. Méthode selon l'une des revendications précédentes, **caractérisée en ce que** le réseau entraîné à l'étape a3) est optimisé pour éviter d'identifier un défaut inexistant comme un défaut.
